# EUROPEAN PATENT APPLICATION

(11) **EP 4 102 597 A1**
(43) Date of publication of application: **14.12.2022**
(21) Application number: 21750627.8
(22) Date of filing: 28.01.2021
(51) Int. Cl.: H01M 4/36, H01M 4/38, H01M 4/48

(54) **SECONDARY-BATTERY NEGATIVE-ELECTRODE ACTIVE MATERIAL, NEGATIVE ELECTRODE, AND SECONDARY BATTERY**

(30) Priority: 07.02.2020 JP 2020019697
(71) Applicant: DIC Corporation, Tokyo 174-8520 (JP)
(72) Inventor: ZHU, Peixin, Sakura-shi, Chiba 285-8668 (JP); KAWASE, Kenichi, Sakura-shi, Chiba 285-8668 (JP); KATANO, Satoshi, Sakura-shi, Chiba 285-8668 (JP)
(74) Representative: TBK
(86) International application number: PCT/JP2021/002969
(87) International publication number: WO 2021/157459

(57) **Abstract**

An object of the present invention is to provide an active material for a secondary battery negative electrode having excellent charge-discharge characteristics (charge-discharge capacity, initial coulombic efficiency, and cycle characteristics). The object is achieved by providing an active material for a secondary battery negative electrode containing a composite containing a filler and a matrix, the filler containing silicon particles, the matrix containing at least one selected from the group consisting of carbon, SiOC, and SiOx (0.5 < x < 1.5), the matrix further containing a nitride, and N1s binding energy of the nitride by X-ray photoelectron spectroscopy (XPS) having at least one peak in a range of above 395 eV and 405 eV or less.

## Description

### Technical Field

The present invention relates to an active material for a secondary battery negative electrode, a negative electrode containing the active material for a secondary battery negative electrode, and a secondary battery including the negative electrode.

### Background Art

In recent years, there is an increasing demand for compact, high-capacity secondary batteries with the spread of portable electronic devices such as smartphones. Among these, lithium-ion secondary batteries (may be denoted as LIBs) are being rapidly applied to electric vehicles (EVs), and their industrial applications continue to expand. Although graphite active materials (natural and artificial) as a type of carbon are being widely used as negative electrode materials for lithium-ion secondary batteries, the theoretical capacity density of graphite is low (372 mAh/g), and due to the advance of lithium-ion secondary battery construction technology, battery capacity improvement is approaching its limit.

Given these circumstances, to achieve higher capacity and higher energy density in lithium-ion secondary batteries, active materials containing silicon-based materials containing silicon and its oxides to be alloyed with lithium ions are being studied. Among them, silicon oxycarbide (hereinafter may be denoted as SiOC) is a material containing a ceramic framework and free carbon containing Si, O, and C and has been attracting attention for having superior charge-discharge cycle characteristics compared to other types of high-capacity active materials. However, SiOC has not been put into practical use because of having weaknesses in which both charge-discharge capacity and initial coulombic efficiency are low due to its structural limitations. To solve this problem, a method of combining SiOC with silicon, silicon alloys, or silicon oxide is being studied. PTL 1, for example, proposes a negative electrode material for a lithium-ion secondary battery containing composite particles containing 5 to 30% by volume of active material particles containing silicon particles or silicon particles coated with carbon with respect to SiOC. Also disclosed are silicon-based inorganic oxide composite particles in which fine particles of silicon, silicon alloys, or silicon oxide are combined with SiOC as an inorganic binder, and spherical or scaly graphite is introduced (PTL 2). Furthermore, disclosed is a method for obtaining a SiOC/n-Si composite material by mixing commercially available polysilane (RD-684A) with nanosilicon (n-Si) together and firing the mixture (NPL 1).

However, the introduced silicon or silicon alloys are known to cause a decrease in cycle characteristics because the repetition of volume expansion and contraction during charging and discharging causes pulverization, which cuts conductive paths. In the above prior art, chemical bonds within SiOC are not sufficiently studied, and furthermore, correlation in structure and performance between silicon and the like as an additive phase and SiOC is not taken into account, thus limiting improvement in charge-discharge characteristics (referring to simultaneous improvement in charge-discharge capacity, initial coulombic efficiency, and cycle characteristics).

### Citation List

### Patent Literature

PTL 1: Japanese Unexamined Patent Application Publication No. 2016-139579
PTL 2: Japanese Unexamined Patent Application Publication No. 2005-310759

### Non-Patent Literature

NPL 1: Jan Kaspar, et al., Silicon oxycarbide/nano-silicon composite anodes for Li-ion batteries: Considerable influence of nano-crystalline vs. nano-amorphous silicon embedment on the electrochemical properties, Journal of Power Sources, 269(2014), 164-172.

### Summary of Invention

### Technical Problem

In view of the above circumstances, an object of the present invention is to provide an active material for a secondary battery negative electrode having excellent charge-discharge characteristics (charge-discharge capacity, initial coulombic efficiency, and cycle characteristics). Solution to Problem

To achieve the above object, the inventors of the present invention have conducted intensive studies focusing on a configuration that can maximally improve charge-discharge characteristics in an active material for a secondary battery negative electrode containing a composite having a composite containing a filler and a matrix. Consequently, it has been found out that by introducing a minute amount of a nitride into the matrix of the composite in which the filler contains silicon particles, and the matrix contains at least one selected from the group consisting of carbon, SiOC, and SiOx (0.5 < x < 1.5), a silicon nitride compound layer is formed on the surface of the matrix, thereby substantially improving chemical stability and thermal stability around silicon nano particles, thus exhibiting excellent charge-discharge characteristics to reach the present invention.

Specifically, the present invention relates to the following.
Item 1: An active material for a secondary battery negative electrode containing a composite containing a filler and a matrix, the filler containing silicon particles, the matrix containing at least one selected from the group consisting of carbon, SiOC, and SiOx (0.5 < x < 1.5), the matrix further containing a nitride, and N1s binding energy of the nitride by X-ray photoelectron spectroscopy (XPS) having at least one peak in a range of above 395 eV and 405 eV or less.
Item 2: The active material for a secondary battery negative electrode according to Item 1, in which the nitride contains at least one selected from the group consisting of Si₃N₄, Si₂ON, and SiO₂N.
Item 3: The active material for a secondary battery negative electrode according to Item 1 or 2, in which a content of the nitride is 50 to 50,000 mass ppm (0.05 to 5% by mass) in terms of nitrogen element.
Item 4: The active material for a secondary battery negative electrode according to any one of Items 1 to 3, in which an average particle size (d50) of the silicon particles is 1 to 300 nm.
Item 5: The active material for a secondary battery negative electrode according to any one of Items 1 to 4, in which the silicon particles are sheet-shaped and have a length in a long axis direction of 50 to 300 nm and a thickness of 1 to 60 nm.
Item 6: The active material for a secondary battery negative electrode according to any one of Items 1 to 5, in which the active material has a thermal decomposition weight loss of 5 to 60% by mass in the air up to 1,200°C.
Item 7: The active material for a secondary battery negative electrode according to any one of Items 1 to 6, in which the matrix is surface-coated with a low crystallinity carbon film, and an average thickness of the low crystallinity carbon film is 10 to 300 nm.
Item 8: A negative electrode containing the active material for a secondary battery negative electrode according to any one of Items 1 to 7.
Item 9: A secondary battery including the negative electrode according to Item 8.

### Advantageous Effects of Invention

The active material for a secondary battery negative electrode according to the present invention has excellent charge-discharge characteristics (charge-discharge capacity, initial coulombic efficiency, and cycle characteristics) when used for a battery.

Although the mechanism by which the present invention shows the above advantageous effects is not certain, the following shows what is currently presumed.

In the active material for a secondary battery negative electrode containing a composite containing a filler and a matrix, by further introducing a minute amount of a nitride into the matrix of the composite in which the filler contains silicon particles, and the matrix contains at least one selected from the group consisting of carbon, SiOC, and SiOx (0.5 < x < 1.5), a silicon nitride compound such as Si₃N₄ is formed after firing, and this silicon nitride compound is present near the silicon particles. Consequently, the active material for a secondary battery negative electrode according to the present invention can avoid contact between the silicon particles and an electrolyte, greatly improving the chemical stability and the thermal stability of the silicon particles on the surface of the silicon particles, retaining conductive paths by an effective protective action for the silicon particles, exhibiting a moderate volume buffering action, and thus excellent charge-discharge characteristics can be obtained when used for a battery.

### Brief Description of Drawings

FIG. 1 is a measurement result of XPS measurement in Example 1.
FIG. 2 is a measurement result of XPS measurement in Example 2.

### Description of Embodiments

### <Active Material for Secondary Battery Negative Electrode>

An active material for a secondary battery negative electrode according to the present invention contains a composite containing a filler and a matrix, the filler containing silicon particles, the matrix containing at least one selected from the group consisting of carbon, SiOC, and SiOₓ (0.5 < x < 1.5), the matrix further containing a nitride, and the N1s binding energy of the nitride by X-ray photoelectron spectroscopy (XPS) having at least one peak in a range of above 395 eV and 405 eV or less. The following describes a configuration according to the present invention.

### (Carbon)

Carbon as an optional component forming the matrix exists as a carbonaceous phase in the matrix. Carbon can be formed by firing carbonized materials such as phenolic resins, amorphous carbon, or resins as a carbon source such as soft carbon, for example.

Carbon has excellent conductivity, and at the same time, if the contained carbon exists in a specific chemical bonding state, the crystalline/amorphous carbon structure of the carbon is well-balanced, and a Si-O-C skeleton structure of SiOC and carbon forming the matrix can form a three-dimensional intertwined structure, for example. This carbon, when used in battery negative electrodes, is believed to be able to flexibly follow the volume change of silicon particles during charging and discharging. The state of this carbon is expressed using the equivalent ratio of sp² and sp³.

The states of carbon sp² and sp³ are expression modes of the chemical bonding state of carbon well known to those skilled in the art. The crystalline graphite structure (C=C) is expressed as sp², whereas the diamond structure (C-C) is expressed as sp³. The crystalline or amorphous state of carbon is determined by the constituent equivalent ratio between sp² and sp³. They can be easily identified by ¹³C solid-state NMR measurement. Note that the carbon in the Si-O-C skeleton structure is not detected because there is no C-C bond, and thus ¹³C-NMR measurement can detect only information on carbon in carbon.

In the active material for a secondary battery negative electrode according to the present invention, the amount of presence of carbon has a significant effect on charge-discharge characteristics. An insufficient amount of carbon may result in poor conductivity and deteriorated charge-discharge characteristics. On the other hand, if the amount of carbon is extremely large, the charge-discharge capacity of the active material as a whole decreases because the theoretical capacity of carbon itself is lowered.

Carbon is easily thermally decomposed in the air, and the amount of presence of carbon can be calculated by a thermal weight loss value. The thermal decomposition weight loss is easily identified by using a thermogravimeterdifferential thermal analyzer (TG-DTA). Carbon has a structure similar to that of hard carbon and causes a rapid weight loss as it is thermally decomposed in the air in an approximate temperature range of 600°C to 900°C. While the highest temperature for the TG-DTA measurement is not limited to a particular temperature, in order to ensure a thermal decomposition reaction, the TG-DTA measurement is preferably performed under the condition in the air up to 1,000°C. For the reasons described above, the obtained weight loss value indicates the amount of presence of carbon. The amount of carbon in the active material for a secondary battery negative electrode according to the present invention is preferably 5 to 60% by mass and more preferably 8 to 50% by mass.

### (Silicon Oxycarbide: SiOC)

Silicon oxycarbide (SiOC) as an optional component forming the matrix is a structure having a Si-O-C skeleton structure containing silicon (except for zero-valent), oxygen, and carbon. SiOC can be formed by firing a polysiloxane compound.

### (Silicon Oxide: SiOₓ)

Silicon oxide as an optional component forming the matrix is represented by a general formula SiOₓ (0.5 < x < 1.5), is a generic term for amorphous silicon oxides, and is a structure having a Si - O skeleton structure containing silicon (except for zero-valent) and oxygen. Silicon oxide can be formed by firing a polysiloxane compound. As to x, 0.8 ≤ x < 1.5 is preferred, and 0.8 ≤ x < 1.3 is more preferred.

### (Silicon Particles)

The composite of the active material for secondary battery negative electrode according to the present invention contains silicon (zero-valent) particles as a filler. The presence of these silicon (zero-valent) particles can improve charge-discharge capacity and initial coulombic efficiency when used for a battery.

The volume average particle size (d50) of the silicon particles is preferably 1 to 300 nm, more preferably 10 to 250 nm, and even more preferably 20 to 200 nm. The volume average particle size (d50) of the silicon particles can be measured by dynamic light scattering using a laser particle size analyzer or the like. The silicon particles with a large size exceeding 200 nm form large lumps, easily cause a pulverization phenomenon during charging and discharging, and are thus assumed to tend to reduce the charge-discharge performance of the active material. On the other hand, the silicon particles with a small size less than 10 nm are extremely fine, and thus the silicon particles easily aggregate with each other. Thus, it becomes difficult to uniformly disperse the small silicon particles into the active material, and in addition, the surface active energy of the small particles is high, and there is a tendency for more by-products and the like to form on the surface of the small silicon particles by high-temperature firing of the active material, which leads to a significant decrease in charge-discharge performance.

The silicon particles preferably have a sheet shape and preferably have a length in a long axis direction of 50 to 300 nm and a thickness of 1 to 60 nm. In the present invention, the sheet shape indicates, in particular, that the thickness/length (what is called an aspect ratio) is 0.5 or less. The silicon particles with a large size with an aspect ratio exceeding 0.5 form large lumps, easily cause a pulverization phenomenon during charging and discharging, and are thus assumed to tend to reduce the charge-discharge performance of the active material.

As to the morphology of the silicon particles having a sheet shape, their average particle size can be measured by dynamic light scattering. By using analytic means such as a transmission electron microscope (TEM) or a field emission scanning electron microscope (FE-SEM), the morphology (size, shape, and the like) of a sample such as the thickness/length described above can be identified more easily and precisely. In the case of negative electrode active material powder encapsulating sheet-shaped silicon nanoparticles, a sample can be cut with a focused ion beam (FIB), and its section can be observed with an FE-SEM, or the sample can be sliced to identify the state of the silicon particles by TEM observation.

The size range of the silicon particles defined in the present invention is a calculation result based on 50 particles in a main part of the sample within the field of view in a TEM image. Because of the limitations of the field of view of observation, it is acceptable for the silicon particles according to the present invention to have sizes outside the above range.

### (Nitride)

The active material for a secondary battery negative electrode according to the present invention further contains a nitride in the matrix, and the N1s binding energy of the nitride by X-ray photoelectron spectroscopy (XPS) has at least one peak in a range of above 395 eV and 405 eV or less. This peak is derived from the nitride such as Si₃N₄, Si₂ON, or SiO₂N, and having a peak in this range means that the active material contains the nitride. The active material for a secondary battery negative electrode according to the present invention preferably contains at least one nitride selected from the group consisting of Si₃N₄, Si₂ON, and SiO₂N in the matrix. The content of the nitride is preferably 50 to 50,000 mass ppm (0.05 to 5% by mass), more preferably 100 to 45,000 mass ppm (0.1 to 4.5% by mass), and particularly preferably 500 to 40,000 mass ppm (0.5 to 4% by mass) in terms of nitrogen element. The content of the nitride can be calculated by conducting elemental analysis for the N element. The nitride can be formed by firing resins or the like as nitrogen sources such as amines, imines, and enamines together with the polysiloxane compound forming the matrix and/or the silicon particles as the filler.

The active material for a secondary battery negative electrode according to the present invention has a thermal decomposition weight loss of preferably 5 to 60% by mass and more preferably 10 to 50% by weight in the air up to 1,200°C measured using TG-DTA. The thermal decomposition weight loss in the above range keeps free carbon within a certain range. Although the conductivity of the active material improves as the content of free carbon increases, the charge-discharge capacity tends to decrease. On the other hand, although the charge-discharge capacity improves along with a reduction in free carbon, a decrease in conductivity and degradation in cycle characteristics cannot be avoided.

In the active material for a secondary battery negative electrode according to the present invention, the matrix may be surface-coated with a low crystallinity carbon film. The average thickness of the low crystallinity carbon film is preferably 10 to 300 nm and more preferably 20 to 200 nm. The matrix surface-coated with the low crystallinity carbon film can protect the silicon particles, which gives the chemical stability and the thermal stability of the silicon particles, and consequently the reduction in charge-discharge performance can be further inhibited.

### [Method for Producing Active Material for Secondary Battery Negative Electrode according to Present Invention]

The following describes an example of a method for producing the active material for a secondary battery negative electrode according to the present invention.

The active material for a secondary battery negative electrode according to the present invention can be produced by going through Step 1 of mixing and dispersing a suspension of silicon (zero-valent), a polysiloxane compound, a resin as a carbon source, and a resin as a nitrogen source for the nitride and then drying the mixed and dispersed product to obtain a mixture (c), Step 2 of firing the mixture (c) obtained in Step 1 in an inert atmosphere to obtain a fired product (d), and Step 3 of pulverizing the fired product (d) obtained in Step 2 to obtain an active material.

### (Step 1)

The method for obtaining the suspension of silicon (zero-valent), which is not limited to a particular method, may be a method of adding commercially available metallic silicon fine particles to an organic solvent to obtain a suspension or a method of subjecting commercially available metallic silicon fine particles to pulverization processing and then obtaining a suspension of silicon (zero-valent) in an organic solvent. As to the pulverization processing, dry pulverization may be used. It is preferable to use wet pulverization, which has an effect of effectively preventing an oxidation reaction of the silicon (zero-valent) particles during processing, for pulverizing the silicon (zero-valent) particles from which a suspension is obtained as it is. As to a pulverization apparatus, which is not limited to a particular apparatus, jet mills, ball mills, bead mills, and the like can be used.

A silicon (zero-valent) raw material for use in the present invention has a purity of preferably 97% or more and more preferably 99.0% or more. As to the organic solvent, which is not limited to a particular organic solvent, any hydrocarbon solvent can be used so long as it does not chemically react with silicon (zero-valent). Examples thereof include acetone, methyl ethyl ketone, methyl isobutyl ketone, and diisobutyl ketone as ketones; ethanol, methanol, normal propyl alcohol, and isopropyl alcohol as alcohols; and benzene, toluene, and xylene as aromatics.

The concentration of the resulting suspension of silicon (zero-valent), which is not limited to a particular concentration, is preferably 5 to 40% by mass and more preferably 10 to 30% by mass. The average particle size of the resulting silicon (zero-valent) particles is measured by dynamic light scattering and ranges from 20 nm to 500 nm, in which the upper limit value of the particle size is preferably 300 nm and more preferably 200 nm.

In the pulverization step of silicon (zero-valent) for use in the active material for a secondary battery negative electrode according to the present invention, a dispersant may be used to prevent agglomeration of the silicon (zero-valent) particles. The type of the dispersant is not limited to a particular type so long as it prevents agglomeration of the silicon (zero-valent) particles after being pulverized and provides a pulverization effect. Examples thereof include polycarboxylic acid partial alkyl ester-based one, polyether-based one, and polyalkylene polyamine-based one as a polymer type; polyhydric alcohol ester-based one and alkyl polyamine-based one as a surfactant type; and polyphosphate-based one as an inorganic type.

In addition, a silane coupling agent can also be used in the silicon (zero-valent) pulverization step described above. The silane coupling agent is an organosilicon compound having in the molecule both a functional group reactively bonding with an organic material and a functional group reactively bonding with an oxide film of silicon (zero-valent), and its structure is generally shown as follows: Y-R-Si-(X)₃. Here, Y is the functional group reactively bonding with the organic material, and representative examples thereof include a vinyl group, an epoxy group, and an amino group. X is the functional group reacting with the oxide film of silicon (zero-valent) and is hydrolyzed by water or moisture to form silanol, and this silanol reactively bonds with the oxide film on silicon (zero-valent). Representative examples of X include an alkoxy group, an acetoxy group, and a chlorine atom.

The use of the dispersant or the silane coupling agent modifies the surface of silicon (zero-valent) and can thus improve the dispersibility of the silicon (zero-valent) particles in a precursor, which may have a favorable effect on the homogeneity of the material.

The polysiloxane compound for use in the production of the active material for a secondary battery negative electrode according to the present invention is not limited to a particular compound so long as it is a resin containing at least one of a polycarbosilane structure, a polysilazane structure, a polysilane structure, and a polysiloxane structure. The polysiloxane compound may be a single resin of these structures or a composite resin having one of them as a segment and chemically bonding with another polymer segment. There are copolymers with graft, block, random, alternating, and the like as the forms of combination. Examples thereof include a composite resin having a graft structure chemically bonding with a polysiloxane segment and a side chain of the polymer segment and a composite resin having a block structure in which the polysiloxane segment chemically bonds with the end of the polymer segment.

The polysiloxane segment preferably has a structural unit represented by General Formula (S-1) below and/or General Formula (S-2) below. 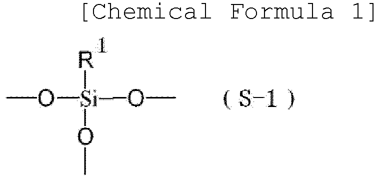 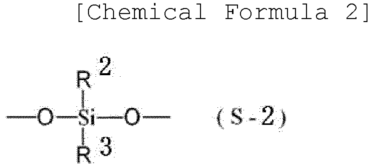 (In General Formulae (S-1) and (S-2) above, R¹ represents an aromatic hydrocarbon substituent or an alkyl group. R² and R³ each indicate an alkyl group, a cycloalkyl group, an aryl group, or an aralkyl group.)

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group. Examples of the cycloalkyl group include a cyclopropyl group, a cyclobutyl group, a cyclopentyl group, and a cyclohexyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the polymer segment that the polysiloxane compound has, other than the polysiloxane segment, include polymer segments such as vinyl polymer segments such as acrylic polymers, fluoro olefin polymers, vinyl ester polymers, aromatic vinyl polymers, and polyolefin polymers, polyurethane polymer segments, polyester polymer segments, and polyether polymer segments. Among them, vinyl polymer segments are preferred.

The polysiloxane compound may be a composite resin in which the polysiloxane segment and the polymer segment bond with each other in the structure shown by Structural Formula (S-3) below and may have a three-dimensional reticulate polysiloxane structure. 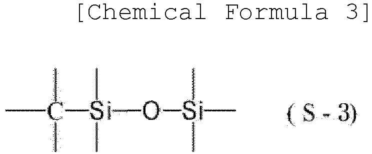 (In the formula, the carbon atom is a carbon atom forming the polymer segment, and the two silicon atoms are silicon atoms forming the polysiloxane segment.)

The polysiloxane segment of the polysiloxane compound may have a functional group in the polysiloxane segment that can react upon heating, such as a polymerizable double bond. Heat treatment on the polysiloxane compound prior to thermal decomposition allows a cross-linking reaction to proceed, making it solid, which can facilitate thermal decomposition treatment.

Examples of the polymerizable double bond include a vinyl group and a (meth)acryloyl group. Two or more polymerizable double bonds are preferably present in the polysiloxane segment, 3 to 200 are more preferably present, and 3 to 50 are even more preferably present. By using a composite resin with two or more polymerizable double bonds as the polysiloxane compound, a cross-linking reaction can be easily caused to proceed.

The polysiloxane segment may have a silanol group and/or a hydrolyzable silyl group. Examples of a hydrolyzable group in the hydrolyzable silyl group include halogen atoms, an alkoxy group, a substituted alkoxy group, an acyloxy group, a phenoxy group, a mercapto group, an amino group, an amide group, an aminooxy group, an iminooxy group, and an alkenyloxy group. These groups are hydrolyzed, whereby the hydrolyzable silyl group become a silanol group. In parallel with the thermosetting reaction, a hydrolytic condensation reaction proceeds between the hydroxy group in the silanol group and the hydrolyzable group in the hydrolyzable silyl group to obtain a solid polysiloxane compound.

The silanol group referred to in the present invention is a silicon-containing group having a hydroxy group directly bonding with the silicon atom. The hydrolyzable silyl group referred to in the present invention is a silicon-containing group having a hydrolyzable group directly bonding with the silicon atom. Specific examples thereof include a group represented by General Formula (S-4) below. 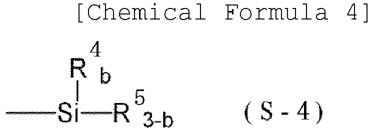 (In the formula, R⁴ is a monovalent organic group such as an alkyl group, an aryl group, or an aralkyl group, and R⁵ is a halogen atom, an alkoxy group, an acyloxy group, an allyloxy group, a mercapto group, an amino group, an amide group, an aminooxy group, an iminooxy group, or an alkenyloxy group. b is an integer of 0 to 2.)

Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, a tert-pentyl group, a 1-methylbutyl group, a 2-methylbutyl group, a 1,2-dimethylpropyl group, a 1-ethylpropyl group, a hexyl group, an isohexyl group, a 1-methylpentyl group, a 2-methylpentyl group, a 3-methylpentyl group, a 1,1-dimethylbutyl group, a 1,2-dimethylbutyl group, a 2,2-dimethylbutyl group, a 1-ethylbutyl group, a 1,1,2-trimethylpropyl group, a 1,2,2-trimethylpropyl group, a 1-ethyl-2-methylpropyl group, and a 1-ethyl-1-methylpropyl group.

Examples of the aryl group include a phenyl group, a naphthyl group, a 2-methylphenyl group, a 3-methylphenyl group, a 4-methylphenyl group, a 4-vinylphenyl group, and a 3-isopropylphenyl group.

Examples of the aralkyl group include a benzyl group, a diphenylmethyl group, and a naphthylmethyl group.

Examples of the halogen atom include a fluorine atom, a chlorine atom, a bromine atom, and an iodine atom.

Examples of the alkoxy group include a methoxy group, an ethoxy group, a propoxy group, an isopropoxy group, a butoxy group, a secondary butoxy group, and a tertiary butoxy group.

Examples of the acyloxy group include formyloxy, acetoxy, propanoyloxy, butanoyloxy, pivaloyloxy, pentanoyloxy, phenylacetoxy, acetoacetoxy, benzoyloxy, and naphthoyloxy.

Examples of the allyloxy group include phenyloxy and naphthyloxy.

Examples of the alkenyloxy group include a vinyloxy group, an allyloxy group, a 1-propenyloxy group, an isopropenyloxy group, a 2-butenyloxy group, a 3-butenyloxy group, a 2-pentenyloxy group, a 3-methyl-3-butenyloxy group, and a 2-hexenyloxy group.

Examples of the polysiloxane segment having the structural units indicated by General Formula (S-1) above and/or General Formula (S-2) above include those having the following structures.

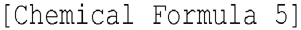

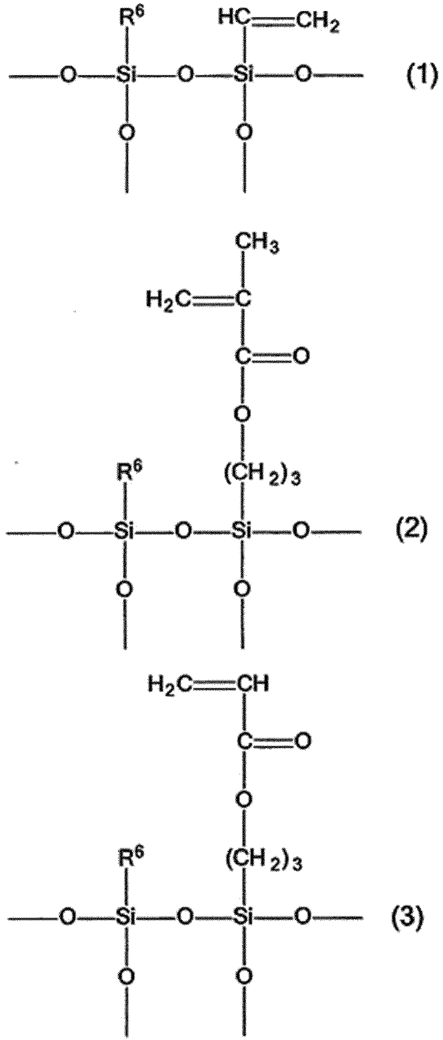

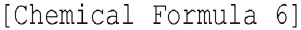

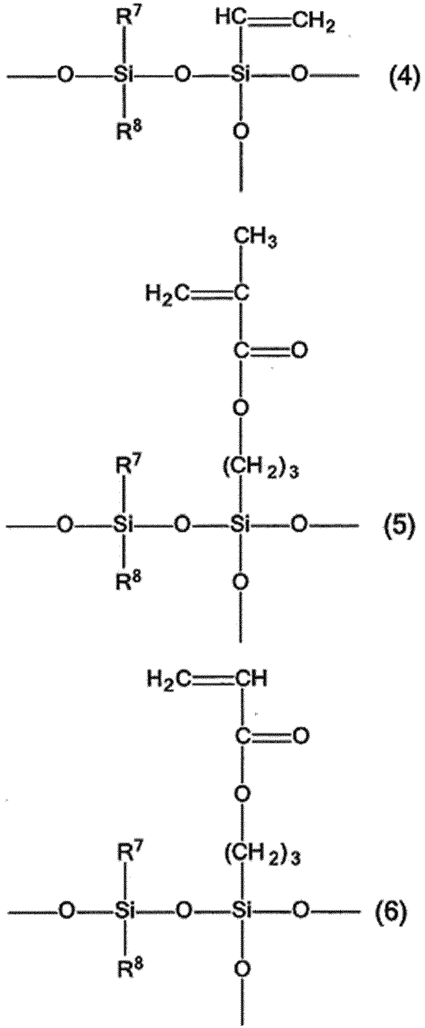

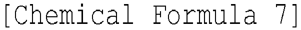

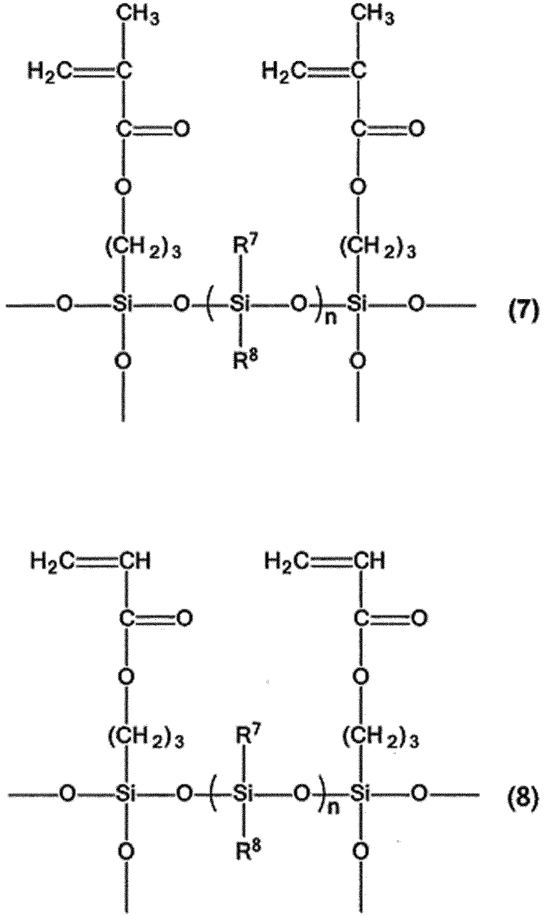

The polymer segment may have various functional groups as needed to the extent that they do not impair the advantageous effects of the present invention. Examples of such functional groups include a carboxy group, a blocked carboxy group, a carboxylic anhydride group, a tertiary amino group, a hydroxy group, a blocked hydroxy group, a cyclocarbonate group, an epoxy group, a carbonyl group, a primary amide group, secondary amide, a carbamate group, and a functional group represented by Structural Formula (S-5) below.

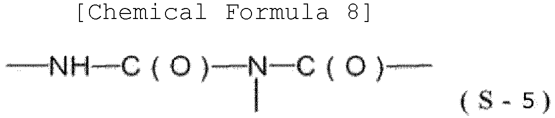

The polymer segment may also have a polymerizable double bond such as a vinyl group or a (meth)acryloyl group.

The polysiloxane compound for use in the present invention can be produced by known methods. Among them it is preferably produced by the methods shown in (1) to (3) below. However, these are not limiting. By firing the polysiloxane compound, silicon oxycarbide and silicon oxide are obtained.
(1) A method of preparing a polymer segment containing a silanol group and/or a hydrolyzable silyl group as a raw material for the polymer segment in advance, mixing this polymer segment and a silane compound containing a silane compound containing a silanol group and/or a hydrolyzable silyl group and a polymerizable double bond together, and performing a hydrolytic condensation reaction.
(2) This method prepares a polymer segment containing a silanol group and/or a hydrolyzable silyl group as a raw material for the polymer segment in advance. A silane compound containing a silane compound containing a silanol group and/or a hydrolyzable silyl group and a polymerizable double bond is subjected to a hydrolytic condensation reaction to also prepare polysiloxane in advance. Then, the polymer segment and polysiloxane are mixed together, and a hydrolytic condensation reaction is performed.
(3) A method of mixing the polymer segment, a silane compound containing a silane compound containing a silanol group and/or a hydrolyzable silyl group and a polymerizable double bond, and polysiloxane together and performing a hydrolytic condensation reaction.

While the resin as the carbon source is not limited to a particular resin so long as it has good miscibility with the polysiloxane compound during the production of the precursor described above and can be carbonized in an inert atmosphere by high-temperature firing, synthetic resins having aromatic functional groups as well as natural chemical raw materials are preferably used. From the viewpoint of availability at low prices and exclusion of impurities, phenolic resins are more preferably used.

Examples of the synthetic resins include thermoplastic resins such as polyvinyl alcohol and polyacrylic acid and thermosetting resins such as phenolic resins and furan resins. Examples of the natural chemical raw materials include heavy oils, especially tar pitches such as coal tar, tar light oil, tar medium oil, tar heavy oil, naphthalene oil, anthracene oil, coal tar pitch, pitch oil, mesophase pitch, oxygen cross-linked petroleum pitch, and heavy oil.

The resin as the nitrogen source for the nitride can be any resin containing the N element. Examples thereof include propylene oxide-modified polyethyleneimine (PEI), octadecyl isocyanate-modified polyethyleneimine, propylene oxide-modified polyethyleneimine, and aminoethylated acrylic polymers.

In the precursor production step described above, the silicon (zero-valent) suspension, the polysiloxane compound, the resin as the carbon source, and the resin as the nitrogen source for the nitride are uniformly mixed together, and then the precursor is obtained through desolventing and drying. In mixing the raw materials together, apparatuses having general-purpose dispersing and mixing functions can be used, although there are no particular limitations. Examples of them include stirrers, ultrasonic mixers, and premix dispersion machines. In the desolventing and drying operations for the purpose of distilling off an organic solvent, dryers, vacuum dryers, spray dryers, or the like can be used.

With respect to the weight of this precursor, it is preferable to set the addition amount of silicon (zero-valent) to 3 to 50% by mass, to contain 15 to 85% by mass of the solid content of the polysiloxane compound, to set the solid content of the resin as the carbon source to 3 to 70% by mass, and to set the resin as the nitrogen source for the nitride to 1 to 50% by mass, and it is more preferable to set the addition amount of the solid content of silicon (zero-valent) to 8 to 40% by mass, the solid content of the polysiloxane compound to 20 to 70% by mass, the solid content of the resin as the carbon source to 3 to 60% by mass, and the resin as the nitrogen source for the nitride to 2 to 40% by mass.

### (Step 2)

Step 2 is a step of high-temperature firing the precursor in an inert atmosphere to completely decompose thermally decomposable organic components and to make the other main components into a fired product suitable for the active material for a secondary battery negative electrode according to the present invention by the precise control of the firing conditions. Specifically, the "Si-O" bonds present in the raw material polysiloxane compound form a Si-O-C skeleton structure by the progress of a dehydration condensation reaction by the energy of high-temperature treatment, and the resin as the carbon source, which has been homogenously dispersed, is carbonized to be converted as free carbon within a three-dimensional structure having the Si-O-C skeleton structure. The resin as the nitrogen source for the nitride reacts with Si after firing to become the nitride such as Si₃N₄, Si₂ON, or SiO₂N.

Step 2 above is firing the precursor obtained in Step 1 above in an inert atmosphere in line with a program of firing. The highest attainable temperature is the highest temperature to be set and has a strong influence on the structure and performance of the fired product. The highest attainable temperature in the present invention is preferably 1,020°C to 1,180°C and more preferably 1,050°C to 1,150°C. By performing firing in this temperature range, the microstructure of the material possessing the chemical bonding state of silicon and carbon described above can be well formed, and silicon (zero-valent) oxidation by extremely high-temperature firing can also be avoided, and thus excellent charge-discharge characteristics can be obtained.

While the method of firing is not limited to a particular method, a reaction apparatus having a heating function in an atmosphere may be used, and continuous or batch processing is possible. As to the apparatus for firing, fluidized bed reactors, rotary furnaces, vertical moving bed reactors, tunnel furnaces, batch furnaces, rotary kilns, or the like can be selected as appropriate in accordance with the purpose.

While the inert atmosphere described above is not limited to a particular atmosphere, and it suffices if any oxidizing gas is not contained. Among them, many kinds of inert gases such as nitrogen and argon can be used, and in addition, a nitrogen/hydrogen mixed gas, pure hydrogen, carbon monoxide, or the like as a reducing atmosphere can also be used.

### (Step 3)

Step 3 is pulverizing the fired product obtained in Step 2 above and performing classification as needed to obtain the active material for a secondary battery negative electrode according to the present invention. Pulverization may be performed in one step or performed in several steps for a desired particle size. For example, when the fired product is in a lump or agglomerated particles of 10 mm or more, and the active material of 10 µm is to be produced, coarse pulverization is performed with a jaw crusher, a roll crusher, or the like to make particles of about 1 mm, which are then made to be 100 µm with a glow mill, a ball mill, or the like, which are then pulverized to 10 µm with a bead mill, a jet mill, or the like. To remove coarse particles that may be contained in the particles produced by pulverization or when fine particles are removed to adjust particle size distribution, classification is performed. The classifier used is a wind power classifier, a wet classifier, or the like, which varies in accordance with the purpose. In removing coarse particles, a method of classification including sifting is preferred because it can surely achieve the purpose.

The average particle size (dynamic light scattering) of the active material for a secondary battery negative electrode according to the present invention obtained by the above method of production is preferably 500 nm to 50 µm, more preferably 1 µm to 40 µm, and more preferably 2 to 20 µm.

### [Production of Negative Electrode]

The active material for a secondary battery negative electrode according to the present invention exhibits excellent charge-discharge characteristics as described above, and thus when it is used as a battery negative electrode, it exhibits favorable charge-discharge characteristics.

Specifically, slurry containing the active material for a secondary battery negative electrode according to the present invention and an organic binding agent as essential components and other components such as conductivity aids as needed is made like a thin film on a current collector copper foil, which can be used as a negative electrode.

The negative electrode can also be produced by adding known and customary carbon materials such as graphite to the above slurry. Examples of these carbon materials such as graphite include natural graphite, artificial graphite, hard carbon, and soft carbon.

The resulting negative electrode contains the active material for a secondary battery negative electrode according to the present invention as the active material and is thus a negative electrode for a secondary battery having high capacity and excellent cycle characteristics and also having excellent initial coulombic efficiency. The negative electrode can be obtained by kneading the active material for a secondary battery negative electrode described above and a binder as the organic binding agent together with a solvent with a dispersion apparatus such as a stirrer, a ball mill, a super sand mill, or a pressure kneader to prepare negative electrode material slurry, which is then applied to a current collector to form a negative electrode layer, for example. It can also be obtained by forming the paste-like negative electrode material slurry into a sheet shape, a pellet shape, or the like and integrating it with the current collector.

The organic binding agent is not limited to a particular organic binding agent. Examples thereof include styrene-butadiene rubber copolymers (SBR); (meth)acrylic copolymers containing ethylenically unsaturated carboxylic esters (methyl (meth)acrylate, ethyl (meth)acrylate, butyl (meth)acrylate, (meth)acrylonitrile, and hydroxyethyl (meth)acrylate, for example) and ethylenically unsaturated carboxylic acids (acrylic acid, methacrylic acid, itaconic acid, fumaric acid, and maleic acid, for example); and polymer compounds such as polyvinylidene fluoride, polyethylene oxide, polyepichlorohydrin, polyphosphazene, polyacrylonitrile, polyimide, polyamideimide, and carboxymethylcellulose (CMC).

These organic binding agents are dispersed or dissolved in water or dissolved in an organic solvent such as N-methyl-2-pyrrolidone (NMP) depending on their physical properties. The content ratio of the organic binding agent in a negative electrode layer of a lithium-ion secondary battery negative electrode is preferably 1 to 30% by mass, more preferably 2 to 20% by mass, and even more preferably 3 to 15% by mass.

The content ratio of the organic binding agent being 1% by mass or more gives good adhesion and inhibits the destruction of a negative electrode structure due to expansion and contraction during charging and discharging. On the other hand, being 30% by mass or less inhibits an increase in electrode resistance.

The active material for a secondary battery negative electrode according to the present invention is easy to handle in terms of practical implementation in that it has high chemical stability and can employ a water-based binder.

The negative electrode material slurry may be mixed with a conductivity aid as needed. Examples of the conductivity aid include carbon black, graphite, acetylene black, and oxides and nitrides exhibiting conductivity. The use amount of the conductivity aid may be about 1 to 15% by mass with respect to the active material for a secondary battery negative electrode according to the present invention.

The material and shape of the current collector are not limited to particular ones. For example, a strip of copper, nickel, titanium, stainless steel, or the like formed into a foil shape, a perforated foil shape, a mesh shape, or the like may be used. Porous materials such as porous metal (foamed metal) and carbon paper can also be used.

The method for applying the negative electrode material slurry to the current collector is not limited to a particular method. Examples thereof include known methods such as metal mask printing, electrostatic coating, dip coating, spray coating, roll coating, doctor blading, gravure coating, and screen printing. After the application, rolling treatment with a flat press, a calender roll, or the like is preferably performed as needed.

Integration of the negative electrode material slurry formed into a sheet shape, a pellet shape, or the like with the current collector can be performed by known methods such as rolling, pressing, or a combination of these methods.

The negative electrode layer formed on the current collector and the negative electrode layer integrated with the current collector are preferably heat treated in accordance with the used organic binding agent. For example, when a known and customary water-based styrene-butadiene rubber copolymer (SBR) or the like is used, heat treatment may be performed at 100 to 130°C, whereas when an organic binding agent with polyimide or polyamideimide as its main skeleton is used, heat treatment is preferably performed at 150 to 450°C.

This heat treatment advances removal of the solvent and higher strength due to the hardening of the binder, which can improve adhesion between particles and between the particles and the current collector. This heat treatment is preferably performed in an inert atmosphere such as helium, argon, or nitrogen or a vacuum atmosphere in order to prevent oxidation of the current collector during the treatment.

The negative electrode is preferably pressed (subjected to pressurization) after the heat treatment. A negative electrode for a secondary battery containing the active material for a secondary battery negative electrode according to the present invention has an electrode density of preferably 1.0 to 1.8 g/cm³, more preferably 1.1 to 1.7 g/cm³, and even more preferably 1.2 to 1.6 g/cm³. As to the electrode density, although higher density tends to improve adhesion and the volume capacitance density of the electrode, extremely high density reduces the number of voids in the electrode, thereby weakening the volume expansion inhibition effect of silicon or the like, thus reducing cycle characteristics.

### <Negative Electrode according to Present Invention>

As described above, the negative electrode containing the active material for a secondary battery negative electrode according to the present invention has excellent charge-discharge characteristics and is thus preferably used for nonaqueous electrolyte secondary batteries and solid electrolyte secondary batteries and exhibits excellent performance when used as the negative electrode of nonaqueous electrolyte secondary batteries in particular, although there are no particular limitations so long as the batteries are secondary batteries.

<Secondary Battery according to Present Invention>

A secondary battery according to the present invention is characterized by the use of the negative electrode according to the present invention already described. For example, when used for a wet electrolyte secondary battery, the wet electrolyte secondary battery can be configured by placing a positive electrode and the negative electrode according to the present invention facing each other via a separator and injecting an electrolyte.

The positive electrode can be obtained by forming a positive electrode layer on the surface of a current collector, similarly to the negative electrode. For the current collector of this case, a strip of metal or alloy such as aluminum, titanium, or stainless steel formed into a foil shape, a perforated foil shape, a mesh shape, or the like can be used.

The positive electrode material for use in the positive electrode layer is not limited to a particular material. Among nonaqueous electrolyte secondary batteries, when a lithium-ion secondary battery is produced, metallic compounds, metal oxides, metal sulfides, or conductive polymer materials capable of doping or intercalating lithium ions may be used, for example, with no particular limitations. Examples thereof include lithium cobaltate (LiCoO₂), lithium nickelate (LiNiO₂), lithium manganate (LiMnO₂), their composite oxides (LiCoxNiyMnzO₂, x + y + z = 1), lithium manganese spinel (LiMn₂O₄), lithium vanadium compounds, V₂O₅, V₆O₁₃, VO₂, MnO₂, TiO₂, MoV₂O₈, TiS₂, V₂S₅, VS₂, MoS₂, MoS₃, Cr₃O₈, Cr₂O₅, olivine type LiMPO₄ (M: Co, Ni, Mn, and Fe), conductive polymers such as such as polyacetylene, polyaniline, polypyrrole, polythiophene, and polyacene, and porous carbon, which can be used singly or in mixture.

As the separator, nonwoven fabrics, cloth, microporous films, or combinations thereof mainly made of polyolefins such as polyethylene and polypropylene can be used, for example. When a structure in which the positive electrode and the negative electrode of the nonaqueous electrolyte secondary battery to be produced are not in direct contact is employed, there is no need to use any separator.

As the electrolyte, for example, what is called an organic electrolyte can be used, in which a lithium salt such as LiClO₄, LiPF₆, LiAsF₆, LiBF₄, or LiSO₃CF₃ is dissolved in a nonaqueous solvent as a single body or a mixture of two or more components such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, γ-butyrolactone, dimethyl carbonate, diethyl carbonate, ethylmethyl carbonate, methylpropyl carbonate, butylmethyl carbonate, ethylpropyl carbonate, butylethyl carbonate, dipropyl carbonate, 1,2-dimethoxyethane, tetrahydrofuran, 2-methyl tetrahydrofuran, 1,3-dioxolane, methyl acetate, or ethyl acetate.

While the structure of the secondary battery according to the present invention is not limited to a particular structure, it is generally structured by winding the positive electrode, the negative electrode, and the separator, which is provided as needed, into a flat spiral shape to make a wound electrode plate group or stacking them into a flat plate shape to make a laminated electrode plate group and encapsulating these electrode plate groups in an outer casing.

The secondary battery containing the active material for a secondary battery negative electrode according to the present invention is used as, with no particular limitations, paper batteries, button batteries, coin batteries, laminated batteries, cylindrical batteries, square batteries, and the like.

The active material for a secondary battery negative electrode according to the present invention described above can also be applied to electrochemical apparatuses in general using insertion and desorption of lithium ions as a charge-discharge mechanism, such as hybrid capacitors and solid lithium secondary batteries.

### [Examples]

Negative electrode active materials were produced by the methods described in Examples 1 to 9 and Comparative Examples 1 to 3 below, and in addition, half-cell batteries were produced. The compositions and battery performances of the respective samples are as listed in Table 1 below.

### (Example 1)

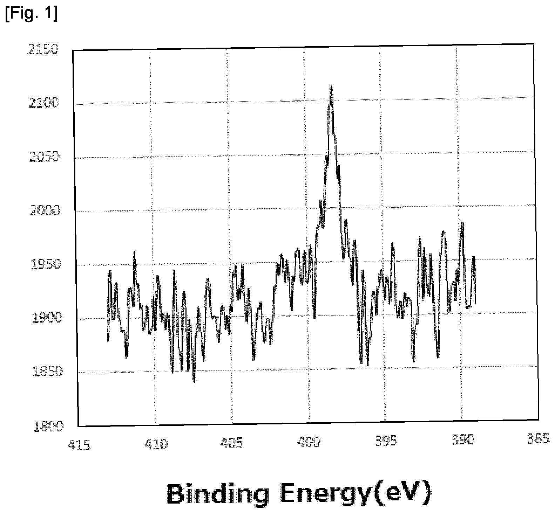

Silicon particles with a particle size range of 150 to 300 nm (average value d50 = 210 nm), a polysiloxane silicon-based organic compound, and a phenolic resin were added and mixed together so as to give a ratio of SiOC/C/Si = 0.2/0.4/0.4 in a constituent mass ratio after high-temperature firing. To this mixture, 10 parts by mass of propylene oxide-modified polyethyleneimine (PEI) with respect to 100 parts by mass of the silicon particles was added, and after stirring for 10 minutes using a stirrer manufactured by Primix Corporation, the mixture was dried under reduced pressure to obtain a precursor solid. The obtained precursor solid was high-temperature fired at 1,100°C for 6 hours in an argon atmosphere to obtain a black solid as a fired product. N elemental analysis was conducted on this black solid, and the content of the N element was 1.2% by weight with respect to the entire fired product. XPS measurement was conducted, and N1s showed a peak in a binding energy range of 395 to 405 eV. FIG. 1 illustrates a measurement result of the XPS measurement. This peak is estimated to be attributed to the chemical bonds of compounds such as Si₃N₄, Si₂ON, and SiO₂N. This fired product was further pulverized with a planetary ball mill to obtain a negative electrode active material. The particle size of this negative electrode active material was measured, and it had an average particle size (d50) of 7 µm. Differential thermal analysis (TG-DTA, Rigaku Thermo plus EV02) was conducted on the negative electrode active material in the air up to 1,200°C, and it had a weight loss rate of 43%. This weight loss is estimated to be due to thermal decomposition of free carbon that was present in the negative electrode active material (in Table 1, Carbon amount in particles, which is the same hereafter).

Slurry was prepared by mixing negative electrode active material powder (80 parts by mass), a conductivity aid (acetylene black, 10 parts by mass), and a binder (CMC + SBR, 10 parts by mass) together. This slurry was applied onto a copper foil to form a film and was then dried under reduced pressure at 110°C to produce a negative electrode. A Li metal foil was counterposed to this negative electrode to produce a half cell. A charge-discharge test with 10 cycles was conducted on this half cell with a cutoff voltage range of 0.005 to 1.5 V and a charge-discharge rate of 0.1 C (from the initial to the third cycle) and 0.2 C (the fourth cycle and the subsequent ones). The charge-discharge test showed an initial discharge capacity of 1,450 mAh/g, an initial coulombic efficiency of 83%, and a capacity retention after 10 cycles of 75%.

### (Example 2)

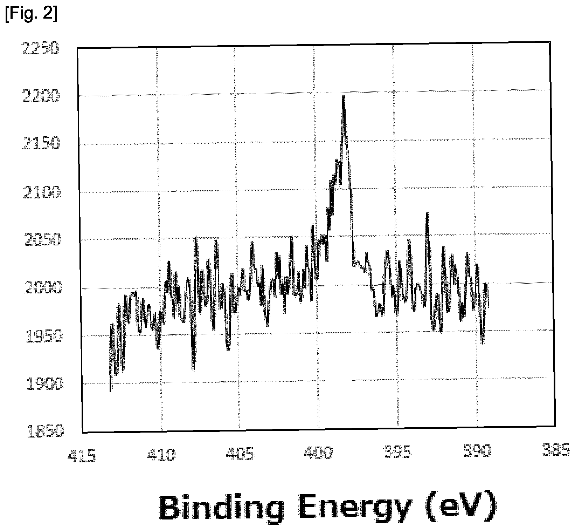

A negative electrode active material and a half cell were produced in the same manner as in Example 1 except that sheet-shaped silicon with a long axis direction in a range of 150 to 300 nm and a thickness in a range of 40 to 60 nm was used as the silicon particles. FIG. 2 illustrates a measurement result of the XPS measurement on the negative electrode active material.

### (Example 3)

A negative electrode active material and a half cell were produced in the same manner as in Example 2 except that the addition amount of propylene oxide-modified polyethyleneimine (PEI) was 2 parts by mass. According to the XPS measurement result, N1s showed a peak in a binding energy range of 395 to 405 eV.

### (Example 4)

A negative electrode active material and a half cell were produced in the same manner as in Example 2 except that the addition amount of propylene oxide-modified polyethyleneimine (PEI) was 40 parts by mass. According to the XPS measurement result, N1s showed a peak in a binding energy range of 395 to 405 eV.

### (Example 5)

Using sheet-shaped silicon with a long axis direction in a range of 50 to 150 nm and a thickness in a range of 10 to 50 nm as the silicon particles, tetraethoxysilane as a raw material for SiOx and a phenolic resin were added and mixed therewith so as to give a ratio of SiOx/C/Si = 0.2/0.4/0.4 in a constituent mass ratio after high-temperature firing. To this mixture, 10 parts by mass of propylene oxide-modified polyethyleneimine (PEI) with respect to 100 parts by mass of the silicon particles was added to obtain a black solid fired product under the same conditions as in Example 1. N elemental analysis was conducted on this black solid, and the content of the N element was 1.5% by weight with respect to the entire fired product. XPS measurement was conducted, and N1s showed a peak in a binding energy range of 395 to 405 eV. Using this fired product, a half cell was produced, and its performance evaluation was performed.

### (Example 6)

Using sheet-shaped silicon with a long axis direction in a range of 50 to 150 nm and a thickness in a range of 10 to 50 nm as the silicon particles, a phenolic resin was added and mixed therewith so as to give a ratio of C/Si = 0.5/0.5 in a constituent mass ratio after high-temperature firing. To this mixture, 10 parts by mass of propylene oxide-modified polyethyleneimine (PEI) with respect to 100 parts by mass of the silicon particles was added to obtain a black solid fired product under the same conditions as in Example 1. N elemental analysis was conducted on this black solid, and the content of the N element was 1.5% by weight with respect to the entire fired product. XPS measurement was conducted, and N1s showed a peak in a binding energy range of 395 to 405 eV. Using this fired product, a half cell was produced, and its performance evaluation was performed.

### (Example 7)

A negative electrode active material and a half cell were produced in the same manner as in Example 1 except that the same sheet-shaped silicon as in Example 5 was used as the silicon particles, and a polysiloxane silicon-based organic compound and a phenolic resin were added and mixed therewith so as to give a ratio of SiOC/C/Si = 0.1/0.4/0.5 in a constituent mass ratio after high-temperature firing. According to the XPS measurement result, N1s showed a peak in a binding energy range of 395 to 405 eV.

### (Example 8)

After producing a negative electrode active material in the same manner as in Example 7, low crystallinity carbon was applied thereto by chemical vapor deposition (CVD, using acetylene gas, 850°C) to provide a carbon coating layer on the negative electrode active material. A section of this carbon coating layer was observed with a TEM, and it had an average thickness of 150 nm. A half cell was produced in the same manner as in Example 1 using the negative electrode active material provided with this carbon coating layer.

### (Example 9)

After producing a negative electrode active material in the same manner as in Example 7, low crystallinity carbon was applied thereto by chemical vapor deposition (CVD, using acetylene gas, 850°C) to provide a carbon coating layer on the negative electrode active material. A section of this carbon coating layer was observed with a TEM, and it had an average thickness of 25 nm. A half cell was produced in the same manner as in Example 1 using the negative electrode active material provided with this carbon coating layer.

### (Example 10)

A negative electrode active material and a half cell were produced in the same manner as in Example 1 except that sheet-shaped silicon with a long axis direction in a range of 50 to 150 nm and a thickness in a range of 10 to 50 nm was used as the silicon particles, and the addition amount of propylene oxide-modified polyethyleneimine (PEI) was 0.1 part by mass with respect to 100 parts by mass of the silicon particles. According to the XPS measurement result, N1s showed a peak in a binding energy range of 395 to 405 eV.

### (Example 11)

A negative electrode active material and a half cell were produced in the same manner as in Example 1 except that sheet-shaped silicon with a long axis direction in a range of 50 to 150 nm and a thickness in a range of 10 to 50 nm was used as the silicon particles, and the addition amount of propylene oxide-modified polyethyleneimine (PEI) was 0.8 part by mass with respect to 100 parts by mass of the silicon particles. According to the XPS measurement result, N1s showed a peak in a binding energy range of 395 to 405 eV.

### (Example 12)

Using sheet-shaped silicon with a long axis direction in a range of 50 to 150 nm and a thickness in a range of 10 to 50 nm as the silicon particles, a polysiloxane silicon-based organic compound was added and mixed therewith so as to give a ratio of SiOC/Si = 0.5/0.5 in a constituent mass ratio after high-temperature firing. A black solid fired product was obtained under the same conditions as in Example 1 except that 10 parts by mass of propylene oxide-modified polyethyleneimine (PEI) with respect to 100 parts by mass of the silicon particles was added to this mixture. A half cell was thus produced, and its performance evaluation was performed. According to the XPS measurement result, N1s showed a peak in a binding energy range of 395 to 405 eV.

### (Example 13)

Using sheet-shaped silicon with a long axis direction in a range of 50 to 150 nm and a thickness in a range of 10 to 50 nm as the silicon particles, hydrolyzed gel of tetraethoxysilane as a raw material for SiOx was added and mixed therewith so as to give a ratio of SiOx/Si = 0.5/0.5 in a constituent mass ratio after high-temperature firing. A black solid fired product was obtained under the same conditions as in Example 1 except that 10 parts by mass of propylene oxide-modified polyethyleneimine (PEI) with respect to 100 parts by mass of the silicon particles was added to this mixture. Low crystallinity carbon was applied to the powder after being pulverized by chemical vapor deposition (CVD, using acetylene gas, 850°C) to produce a carbon coating layer on the negative electrode active material. The average thickness of the carbon film was 110 nm. According to the XPS measurement result, N1s showed a peak in a binding energy range of 395 to 405 eV. Finally, a half cell was produced, and its performance evaluation was performed.

### (Example 14)

A negative electrode active material and a half cell were produced in the same manner as in Example 7 except that sheet-shaped silicon with a long axis direction in a range of 50 to 150 nm and a thickness in a range of 10 to 50 nm was used as the silicon particles, and that the addition amount of aminoethylated acrylic polymer was 10 parts by mass with respect to 100 parts by mass of the silicon particles. According to the XPS measurement result, N1s showed a peak in a binding energy range of 395 to 405 eV.

### (Comparative Example 1)

The same sheet-shaped silicon with a long axis direction in a range of 150 to 300 nm and a thickness in a range of 40 to 60 nm as in Example 2, a polysiloxane silicon-based organic compound and a phenolic resin were added and mixed therewith so as to give a ratio of SiOC/C/Si = 0.2/0.4/0.4 in a constituent mass ratio after high-temperature firing. A precursor was produced by stirring without adding propylene oxide-modified polyethyleneimine (PEI) and was then dried under reduced pressure. Then, the precursor was high-temperature fired at 1,100°C for 6 hours in an argon atmosphere to obtain a black solid as a negative electrode active material. N elemental analysis and XPS measurement were conducted on this negative electrode active material in the same manner as in Example 1, with no N element detected in both cases. A half-cell battery was produced in the same manner as in Example 1 using this negative electrode active material, and a charge-discharge test was conducted. The charge-discharge test showed an initial discharge capacity of 1,380 mAh/g, an initial coulombic efficiency of 83%, and a capacity retention after 10 cycles of 55%.

### (Comparative Example 2)

Using sheet-shaped silicon with a long axis direction in a range of 50 to 150 nm and a thickness in a range of 10 to 50 nm as the silicon particles, tetraethoxysilane as a raw material for SiOx and a phenolic resin were added and mixed therewith so as to give a ratio of SiOx/C/Si = 0.2/0.4/0.4 in a constituent mass ratio after high-temperature firing. A precursor was produced by stirring without adding propylene oxide-modified polyethyleneimine (PEI) and was then dried under reduced pressure. Then, a black solid fired product was obtained under the same conditions as in Example 1. N elemental analysis was conducted on this black solid, and the content of the N element was not detected. Using this fired product, a half cell was produced, and its performance evaluation was performed, showing decreases in initial coulombic efficiency and cycle characteristics.

### (Comparative Example 3)

Using sheet-shaped silicon with a long axis direction in a range of 50 to 150 nm and a thickness in a range of 10 to 50 nm as the silicon particles, a phenolic resin was added and mixed therewith so as to give a ratio of C/Si = 0.5/0.5 in a constituent mass ratio after high-temperature firing. A precursor was produced by stirring without adding propylene oxide-modified polyethyleneimine (PEI) and was then dried under reduced pressure. Then, a black solid fired product was obtained under the same conditions as in Example 1. N elemental analysis was conducted on this black solid, and the content of the N element was not detected. Using this fired product, a half cell was produced, and its performance evaluation was performed, showing decreases in initial coulombic efficiency and cycle.

### (Comparative Example 4)

Under the same configurational conditions as in Comparative Example 2, a precursor was produced by stirring without adding propylene oxide-modified polyethyleneimine (PEI) and was then dried under reduced pressure. Then, the precursor was high-temperature fired at 1,100°C for 6 hours in a mixed gas of 0.1 L/min of methane and 0.5 L/min of nitrogen to obtain a black solid. N elemental analysis was conducted on this black solid, and the content of the N element was 5.4% by weight with respect to the entire fired product. Using this fired product, a half cell was produced, and its performance evaluation was performed, showing decreases in initial coulombic efficiency and cycle characteristics.

**[Table 1]**

| | Si particle size long axis/thickness [nm] | d50 of Si [nm] | Nitrogen source additive | Carbon amount in particles | Thickness of surface carbon film [nm] | N content [ppm] | Initial discharge capacity [mAh/g] | Initial efficiency | Capacity retention (10 cycles) |
|---|---|---|---|---|---|---|---|---|---|
| Example 1 | 150 to 300 (Particles) | 210 | 10% | 43% | N/A | 12000 | 1450 | 83% | 75% |
| Example 2 | 150 to 300 /40 to 60 | 71 | 10% | 45% | N/A | 12000 | 1370 | 82% | 87% |
| Example 3 | 150 to 300 /40 to 60 | 71 | 2% | 47% | N/A | 4000 | 1390 | 82% | 85% |
| Example 4 | 150 to 300 /40 to 60 | 71 | 40% | 45% | N/A | 31000 | 1355 | 81% | 89% |
| Example 5 | 50 to 150 /10 to 50 | 65 | 10% | 44% | N/A | 11000 | 1410 | 80% | 90% |
| Example 6 | 50 to 150 /10 to 50 | 65 | 10% | 43% | N/A | 14000 | 1350 | 82% | 91% |
| Example 7 | 50 to 150 /10 to 50 | 65 | 10% | 47% | N/A | 13000 | 1510 | 83% | 90% |
| Example 8 | 50 to 150 /10 to 50 | 65 | 10% | 45% | 150 | 12000 | 1410 | 85% | 93% |
| Example 9 | 50 to 150 /10 to 50 | 65 | 10% | 45% | 25 | 12000 | 1430 | 84% | 91% |
| Example 10 | 50 to 150 /10 to 50 | 65 | 0.10% | 43% | N/A | 110 | 1470 | 84% | 86% |
| Example 11 | 50 to 150 /10 to 50 | 65 | 0.80% | 43% | N/A | 900 | 1410 | 83% | 87% |
| Example 12 | 50 to 150 /10 to 50 | 65 | 10% | 5.10% | N/A | 12000 | 1430 | 79% | 92% |
| Example 13 | 50 to 150 /10 to 50 | 65 | 10% | 8% | 110 | 12000 | 1390 | 78% | 91% |
| Example 14 | 50 to 150 /10 to 50 | 65 | 10% | 43% | N/A | 6000 | 1510 | 83% | 89% |
| Comparative Example 1 | 150 to 300 /40 to 60 | 71 | 0 | 45% | N/A | N.D. | 1380 | 83% | 55% |
| Comparative Example 2 | 50 to 150 /10 to 50 | 65 | 0 | 42% | N/A | N.D. | 1420 | 78% | 87% |
| Comparative Example 3 | 50 to 150 /10 to 50 | 65 | 0 | 49% | N/A | N.D. | 1360 | 80% | 88% |
| Comparative Example 4 | 50 to 150 /10 to 50 | 65 | 0 | 43% | 10 | 5.4 | 1410 | 76% | 85% |

## Claims

1. An active material for a secondary battery negative electrode comprising a composite containing a filler and a matrix, the filler containing silicon particles, the matrix containing at least one selected from the group consisting of carbon, SiOC, and SiOx (0.5 < x < 1.5), the matrix further containing a nitride, and N1s binding energy of the nitride by X-ray photoelectron spectroscopy (XPS) having at least one peak in a range of above 395 eV and 405 eV or less.

2. The active material for a secondary battery negative electrode according to claim 1, wherein the nitride contains at least one selected from the group consisting of Si₃N₄, Si₂ON, and SiO₂N.

3. The active material for a secondary battery negative electrode according to claim 1 or 2, wherein a content of the nitride is 50 to 50,000 mass ppm (0.05 to 5% by mass) in terms of nitrogen element.

4. The active material for a secondary battery negative electrode according to any one of claims 1 to 3, wherein an average particle size (d50) of the silicon particles is 1 to 300 nm.

5. The active material for a secondary battery negative electrode according to any one of claims 1 to 4, wherein the silicon particles are sheet-shaped and have a length in a long axis direction of 50 to 300 nm and a thickness of 1 to 60 nm.

6. The active material for a secondary battery negative electrode according to any one of claims 1 to 5, wherein the active material has a thermal decomposition weight loss of 5 to 60% by mass in the air up to 1,200°C.

7. The active material for a secondary battery negative electrode according to any one of claims 1 to 6, wherein the matrix is surface-coated with a low crystallinity carbon film, and an average thickness of the low crystallinity carbon film is 10 to 300 nm.

8. A negative electrode comprising the active material for a secondary battery negative electrode according to any one of claims 1 to 7.

9. A secondary battery comprising the negative electrode according to claim 8.
